# EUROPEAN PATENT SPECIFICATION

(11) **EP 4 484 835 B1**
(45) Date of publication and mention of the grant of the patent: **27.05.2026**
(21) Application number: 23902156.1
(22) Date of filing: 21.08.2023
(51) Int. Cl.: F24F 1/0022, F24F 1/0033, F24F 1/0043, F24F 1/0047, F24F 1/0059, F24F 13/22

(54) **AIR CONDITIONER INDOOR UNIT AND AIR CONDITIONER**
INNENRAUMEINHEIT EINER KLIMAANLAGE UND KLIMAANLAGE
UNITÉ INTÉRIEURE DE CLIMATISEUR ET CLIMATISEUR

(30) Priority: 12.12.2022 CN 202223357502 U; 12.12.2022 CN 202223358172 U
(43) Date of publication of application: 01.01.2025
(73) Proprietor: GD Midea Heating & Ventilating Equipment Co., Ltd., Foshan, Guangdong 528311 (CN); Hefei Midea Heating & Ventilating Equipment Co., Ltd., Hefei, Anhui 230601 (CN)
(72) Inventor: KAN, Changli, Foshan, Guangdong 528311 (CN); GU, Yong, Foshan, Guangdong 528311 (CN); LI, Yunzhi, Foshan, Guangdong 528311 (CN); TANG, Changqing, Foshan, Guangdong 528311 (CN); GE, Shanshan, Foshan, Guangdong 528311 (CN); ZHOU, Baisong, Foshan, Guangdong 528311 (CN); ZHU, Menghao, Foshan, Guangdong 528311 (CN); MA, Mingtao, Foshan, Guangdong 528311 (CN); WEN, Lichao, Foshan, Guangdong 528311 (CN); WU, Lin, Foshan, Guangdong 528311 (CN); FENG, Zhengbo, Foshan, Guangdong 528311 (CN); YAO, Xiao, Foshan, Guangdong 528311 (CN); SHI, Danmei, Foshan, Guangdong 528311 (CN)
(74) Representative: RGTH
(86) International application number: PCT/CN2023/114020
(87) International publication number: WO 2024/124947

(56) References cited:
- WO-A1-2013/046899
- WO-A1-2017/190491
- CN-A- 109 882 943
- CN-U- 204 176 767
- CN-U- 219 063 597
- CN-U- 219 063 599
- US-A1- 2002 067 986
- US-A1- 2003 202 880
- US-A1- 2008 302 120
- US-B2- 10 962 238
- US-B2- 7 571 620

## Description

### FIELD

The present disclosure relates to the technical field of air conditioners, and in particular, to an air-conditioning indoor unit and an air conditioner.

### BACKGROUND

An air-conditioning indoor unit may achieve cooling of indoor air. The air-conditioning indoor unit has many components, such as an evaporator, a wind wheel, and a motor. How to realize a reasonable arrangement of each component is crucial. WO 2013/046899 A1 discloses a built-in-type air conditioning device, in which a filter unit is detachably attached by sliding in the lateral direction of the unit main body. US 2003/202880 A1 discloses a wind wheel assembly of a separable air conditioner, in which at least one motor and a plurality of bearings are alternatively arranged. US 7 571620 B2 discloses an indoor unit of an air conditioner having air discharged to various directions, and using a single fan motor by installing the fan motor in a space between the fans. US 10 962 238 B2 discloses an air conditioner, in which a fan motor and a fan case are integrally coupled to each other through a coupling member.

### SUMMARY

The present invention aims to at least solve technical problems in the related art to some extent. Therefore, the present invention provides an air-conditioning indoor unit, which has a reasonable arrangement of components, effective utilization of space, and high operation efficiency.

In order to achieve the above objective, the present invention relates to an air-conditioning indoor unit according to claim 1. The air-conditioning indoor unit comprises a plurality of centrifugal wind wheels, a motor drivingly connected to a plurality of the centrifugal wind wheels, an electric control box disposed in an axial direction of the plurality of centrifugal wind wheels, and an evaporator disposed in a radial direction of the plurality of centrifugal wind wheels and obliquely disposed relative to a height direction of the air-conditioning indoor unit.

According to the present invention, the air-conditioning indoor unit further comprises a transmission shaft. The centrifugal wind wheels comprise three centrifugal wind wheels. The three centrifugal wind wheels are a first centrifugal wind wheel, a second centrifugal wind wheel, and a third centrifugal wind wheel that are arranged sequentially; and the motor comprises a motor body and a rotation shaft. The rotation shaft has an end connected to the first centrifugal wind wheel and another end connected to the transmission shaft, and the transmission shaft is connected to the second centrifugal wind wheel and the third centrifugal wind wheel.

In some embodiments of the present invention, the motor is disposed between the first centrifugal wind wheel and the second centrifugal wind wheel.

According to the present invention, the air-conditioning indoor unit further comprises a bracket structure for supporting the transmission shaft. The bracket structure is disposed between the second centrifugal wind wheel and the third centrifugal wind wheel.

According to the present invention, the bracket structure comprises a bracket provided with a cavity and an opening in communication with the cavity, a bearing seat mounted to the bracket by embedding into the cavity through the opening, a bearing rubber ring disposed in the bearing seat, and a bearing disposed in the bearing rubber ring. The opening is located in a radial direction of the cavity. The transmission shaft passes through the bearing.

In some embodiments of the present disclosure, the opening is located above the cavity.

According to the present invention, the bearing seat comprises a lower bearing seat and an upper bearing seat that are connected to each other. A mounting cavity for mounting the bearing is defined between the lower bearing seat and the upper bearing seat.

In some embodiments of the present invention, the lower bearing seat and the upper bearing seat are connected to a periphery of the opening.

In some embodiments of the present invention, the lower bearing seat and the upper bearing seat are each provided with a flange connected to the periphery of the opening.

In some embodiments of the present invention, the air-conditioning indoor unit further comprises a fastener sequentially penetrating the flange of the upper bearing seat, the flange of the lower bearing seat, and the periphery of the opening for fastening.

In some embodiments of the present invention, the bearing seat is provided with a groove surrounding the bearing rubber ring, enabling the bearing rubber ring to be embedded in the groove.

In some embodiments of the present invention, the air-conditioning indoor unit further comprises a first drain tray. The evaporator is located above the first drain tray, and the evaporator has a bottom abutting against the first drain tray and a top abutting against a top cover of the air-conditioning indoor unit.

In some embodiments of the present invention, the air-conditioning indoor unit further comprises a support plate provided at each of two opposite ends of the evaporator. The support plate is supported on the first drain tray. An air collection cavity is enclosed by the first drain tray, the support plate, the evaporator, and the top cover.

In some embodiments of the present invention, the support plate is provided with an inclined surface to support an end portion of the evaporator.

In some embodiments of the present invention, the air-conditioning indoor unit further comprises a draining pump. Taking a direction from each of the plurality of centrifugal wind wheels to the evaporator as a first direction, the electric control box and the draining pump are arranged in the first direction.

In some embodiments of the present invention, the air-conditioning indoor unit further comprises a first drain tray located below the evaporator and a second drain tray located below the plurality of centrifugal wind wheels. The evaporator is located on an air inlet path of the plurality of centrifugal wind wheels.

In some embodiments of the present invention, the air-conditioning indoor unit further comprises a housing. The plurality of centrifugal wind wheels, the motor, the evaporator, and the electric control box are disposed in the housing.

The present invention also relates to an air conditioner. The air conditioner comprises the air-conditioning indoor unit as described above.

### BRIEF DESCRIPTION OF THE DRAWINGS

In order to more clearly explain technical solutions of embodiments of the present invention or in the related art, drawings needing to be used in the embodiments or in the description of the related art are briefly described below. Obviously, the drawings as described below are merely some embodiments of the present invention. Based on structures illustrated in these drawings, other designs can be obtained by those skilled in the art without creative efforts.
FIG. 1 is a schematic view of an air-conditioning indoor unit in some embodiments.
FIG. 2 is a partially schematic view of an air-conditioning indoor unit in some embodiments.
FIG. 3 is a partially schematic view of an air-conditioning indoor unit in some embodiments.
FIG. 4 is an exploded view of a bracket structure in some embodiments.
FIG. 5 is an exploded view of a bearing seat in some embodiments.
FIG. 6 is a schematic view of an assembly of a bearing seat in some embodiments.
FIG. 7 is a schematic view of a bracket in some embodiments.
FIG. 8 is a partially exploded view of a bracket structure in some embodiments.
FIG. 9 is a schematic view of a support plate in some embodiments.

Reference numerals are explained as follows:
centrifugal wind wheel 1000, first centrifugal wind wheel 1100, second centrifugal wind wheel 1200, third centrifugal wind wheel 1300;
motor 2000, motor body 2100, rotation shaft 2200;
electric control box 3000;
bracket structure 4000;
bracket 4100, cavity 4110, opening 4120;
bearing seat 4200, lower bearing seat 4210, upper bearing seat 4220, flange 4230, groove 4240, mounting cavity 4250;
bearing 4300;
transmission shaft 4400;
bearing rubber ring 4500;
fastener 4600;
first drain tray 5100, second drain tray 5200, support plate 5300, inclined surface 5310, air collection cavity 5400;
draining pump 6100;
housing 7000, top cover 7100;
evaporator 8000.

Implementation, functional features, and advantages of the objectives of the present invention are further described in conjunction with the embodiments and with reference to the accompanying drawings.

### DETAILED DESCRIPTION

Technical solutions of the present invention will be described clearly and completely below in combination with accompanying drawings in embodiments of the present disclosure. Obviously, the described embodiments are only a part of the embodiments of the present disclosure, rather than all embodiments of the present invention. Based on the embodiments of the present disclosure, other embodiments obtained by those skilled in the art without creative efforts shall fall within scope of the present invention.

It should be noted that, directional indication (such as up, down, left, right, front, rear, etc.) in the embodiments of the present disclosure is only configured to explain a relative position relationship, a motion situation, etc. between components in a certain specific posture (as illustrated in the drawings). When the specific posture changes, the directional indication also changes accordingly.

In the present disclosure, unless otherwise clearly specified and limited, terms such as "connect", "fix" and the like should be understood in a broad sense. For example, unless otherwise clearly limited, "fix" may be a fixed connection or a detachable connection or a connection as one piece; a mechanical connection or an electrical connection; a direct connection or an indirect connection through an intermediate; internal communication of two components or an interaction relationship between two components. For those skilled in the art, specific meanings of the above-mentioned terms in the present disclosure can be understood according to specific circumstances.

In addition, descriptions related to the terms "first" and "second" in the present disclosure are only used for descriptive purposes, and cannot be understood as indicating or implying relative importance or implicitly indicating the number of indicated technical features. Therefore, the features associated with "first" and "second" may explicitly or implicitly comprise at least one of the features. In addition, the technical solutions between the various embodiments may be combined with each other, but must be based on the ability of those of ordinary skill in the art to implement them. In addition, when the combination of the technical solutions is contradictory or cannot be implemented, it should be regarded that the combination of the technical solutions does not exist, nor is within the scope of the present invention.

The present invention provides an air-conditioning indoor unit.

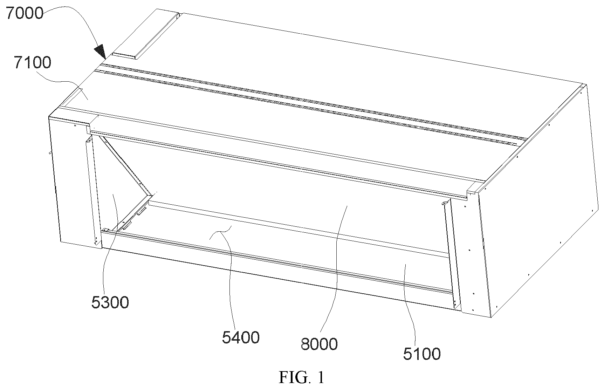

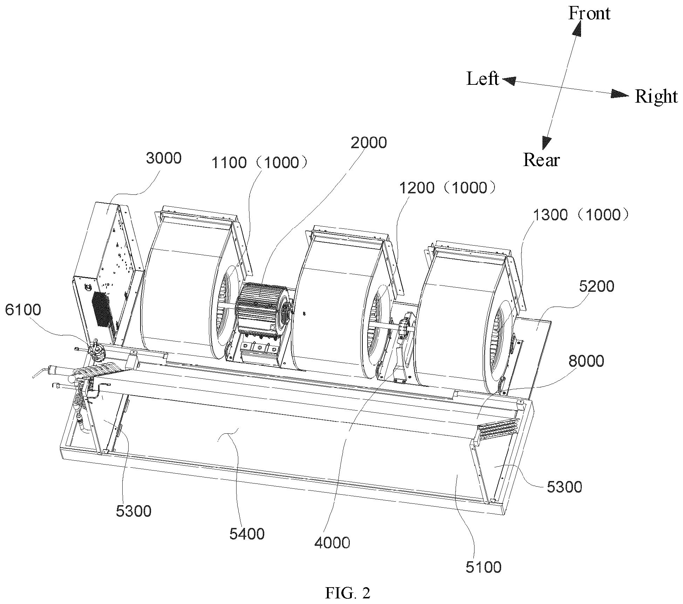

As illustrated in FIG. 1 and FIG. 2, the air-conditioning indoor unit comprises a centrifugal wind wheel 1000, a motor 2000, an electric control box 3000, and an evaporator 8000.

The motor 2000 is drivingly connected to the centrifugal wind wheel 1000, and the centrifugal wind wheel 1000 rotates under action of the motor 2000. In this way, a predetermined negative pressure is formed inside the air-conditioning indoor unit. Therefore, indoor air can be sucked. In general, the air-conditioning indoor unit has a predetermined size, and thus is formed with a plurality of air outlets. A plurality of centrifugal wind wheels 1000 are provided, i.e., at least three centrifugal wind wheels 1000 are provided. Each air outlet is correspondingly provided with one centrifugal wind wheel 1000, and the indoor air sucked by the centrifugal wind wheel 1000 is outputted through the air outlet. In order to make consistent air output through each air outlet and avoid inconsistencies in air output sizes of different air outlets, in this embodiment, by configuring the motor 2000 to be drivingly connected to the plurality of centrifugal wind wheels 1000, i.e., through driving of a same motor 2000, power is transmitted to all the centrifugal wind wheels 1000, making rotational speeds of the centrifugal wind wheels almost same and formed suction forces also almost same. In this way, wind speeds outputted through the air outlet are almost same, and a problem of a partially excessive air volume or partially insufficient air volume is avoided. It can be understood that, as long as the transmission of power to each centrifugal wind wheel 1000 can be realized, a connection between the motor 2000 and the plurality of centrifugal wind wheels 1000 may be implemented in various ways, such as a direct drive connection or an indirect drive connection.

When the centrifugal wind wheel 1000 sucks air under the action of the motor 2000, the air needs to flow through the evaporator 8000 and exchanges with a refrigerant in the evaporator 8000. In this way, cooling of the air is realized. In order to improve a heat exchange capacity of the evaporator 8000, the evaporator 8000 is designed to be inclined. In an exemplary embodiment of the present disclosure, a height direction of the air-conditioning indoor unit (such as a vertical direction) is taken as an example, and a top of the evaporator 8000 may be considered to rotate downwards by a predetermined angle around a bottom of the evaporator 8000. In this way, the evaporator 8000 is formed in an inclined configuration. It can be understood that when a thickness of the air-conditioning indoor unit is constant, the evaporator 8000 is designed to be inclined, which can increase an area of the evaporator 8000, thereby increasing a heat exchange area. In this way, heat exchange efficiency can be improved. In another exemplary embodiment of the present invention, in order to balance the heat exchange efficiency and the thickness of the air-conditioning indoor unit, an angle between the evaporator 8000 and a horizontal plane may be designed to range from 48° to 58°, and may be 48°, 51°, 53°, 58°, and the like. For example, the evaporator 8000 may be designed to form an angle of 37° with the height direction of the air-conditioning indoor unit. When a bottom surface of the air-conditioning indoor unit is horizontal, an angle between the evaporator 8000 and the bottom surface of the air-conditioning indoor unit is 53°. At this angle, optimum heat exchange efficiency may be achieved without a too large thickness of the air-conditioning indoor unit.

In addition, in order to ensure normal operation of the centrifugal wind wheel 1000, the motor 2000, and the evaporator 8000, the air-conditioning indoor unit needs to be provided with an electric control box 3000. The electric control box 3000 needs to be electrically connected to the centrifugal wind wheel 1000, the motor 2000, and the like, and also needs to be electrically connected to an air-conditioning outdoor unit, to ensure normal operation of the entire air conditioning system. In order to ensure that the evaporator 8000 and the electric control box 3000 do not interfere with each other, the electric control box 3000 and the electric control box 3000 are disposed in two different directions. According to the invention, the electric control box 3000 is disposed in an axial direction of the centrifugal wind wheel 1000. It can be understood that the centrifugal wind wheel 1000 has a rotation axis during its rotation, and an extending direction of the rotation axis of the centrifugal wind wheel 1000 is the axial direction of the centrifugal wind wheel 1000. The evaporator 8000 is disposed in a radial direction of the centrifugal wind wheel 1000, and the radial direction of the centrifugal wind wheel 1000 is perpendicular to the axial direction of the centrifugal wind wheel 1000. For example, as illustrated in FIG. 1, the evaporator 8000 is located at the rear of the centrifugal wind wheel 1000. Air flows through the evaporator 8000 from rear to front, and then is sucked by the centrifugal wind wheel 1000 to be discharged forwards to an indoor space. Therefore, the air flowing through the evaporator 8000 is difficult to be in contact with the electric control box 3000, and condensed water carried by the air is also difficult to reach the electric control box 3000, to prevent the electric control box 3000 from being damaged by moisture.

In addition, when the centrifugal wind wheel 1000 is mounted, the air-conditioning indoor unit needs to have a predetermined space provided for realizing the suction of air by the centrifugal wind wheel 1000, and thus a space where the centrifugal wind wheel 1000 is located is large. In this way, the electric control box 3000 can be arranged more flexibly by disposing the electric control box 3000 in the axial direction of the centrifugal wind wheel 1000. Since the electric control box 3000 needs to be electrically connected to other components, the electric control box 3000 has wiring running outwards. At this time, the wiring has no interference with a refrigerant pipeline of the evaporator 8000, preventing an internal structure from appearing overly cluttered. In this way, the internal structure of the air-conditioning indoor unit appears neater, facilitating mounting and maintenance.

According to the technical solutions, by providing the plurality of centrifugal wind wheels 1000 and driving the plurality of centrifugal wind wheels 1000 by the same motor 2000, when the size of the air-conditioning indoor unit is large, a constant air volume may be outputted. The electric control box 3000 is located in the axial direction of the centrifugal wind wheel 1000 and far away from the evaporator 8000, to prevent the electric control box 3000 from being splashed by the condensed water. In addition, since a large space is formed when the centrifugal wind wheel 1000 is provided, the electric control box 3000 is located in the axial direction of the centrifugal wind wheel 1000 to more facilitate an arrangement of the electric control box 3000. The evaporator 8000 is disposed obliquely relative to the air-conditioning indoor unit. In this way, the thickness of the air-conditioning indoor unit can be reduced. Moreover, a condensation area can be increased, and the heat exchange efficiency can be improved.

In another exemplary embodiment of the present invention, as illustrated in FIG. 1 to FIG. 3, three centrifugal wind wheels 1000 are provided. In the three centrifugal wind wheels 1000, there are a third centrifugal wind wheel 1300, a second centrifugal wind wheel 1200, and a first centrifugal wind wheel 1100, respectively. The third centrifugal wind wheel 1300, the second centrifugal wind wheel 1200, and the first centrifugal wind wheel 1100 are arranged sequentially. The arrangement of the three centrifugal wind wheels 1000 (1100/1200/1300) makes the air-conditioning indoor unit have a wide range of air discharge effects, and does not make a product of the air-conditioning indoor unit excessively heavy simultaneously.

In order to realize driving of the three centrifugal wind wheels 1000, the motor 2000 is used to cooperate with a transmission shaft 4400. According to the invention, the motor 2000 has two parts that are a motor body 2100 and a rotation shaft 2200, respectively. The rotation shaft 2200 passes through the motor body 2100, and the motor body 2100 drives the rotation shaft 2200 to rotate. When the rotation shaft 2200 is directly connected to each of the three centrifugal wind wheels 1000, a length of the rotation shaft 2200 needs to be set overlong. An overlong rotation shaft 2200 adversely affects a structural strength of the rotation shaft 2200. In this way, differences in torques borne by various parts in a length direction of the rotation shaft 2200 may be generated, and fracture of the rotation shaft 2200 may occur under driving of the motor body 2100 and under action of the centrifugal wind wheel 1000. Therefore, the transmission shaft 4400 is provided to be connected to the rotation shaft 2200.

In an exemplary embodiment of the present disclosure, the rotation shaft 2200 passes through the motor body 2100, and the rotation shaft 2200 has one end exposed at one side of the motor body 2100 and another end exposed at another side of the motor body 2100. In this way, one end of the rotation shaft 2200 can be connected to the first centrifugal wind wheel 1100, i.e., the first centrifugal wind wheel 1100 is relatively fixed to one end of the rotation shaft 2200. Therefore, the first centrifugal wind wheel 1100 can be driven to rotate when the rotation shaft 2200 rotates. The other end of the rotation shaft 2200 is connected to the transmission shaft 4400, i.e., the rotation shaft 2200 realizes power transmission to the transmission shaft 4400, and the transmission shaft 4400 is rotatable with the rotation of the rotation shaft 2200. It can be understood that a connection between the rotation shaft 2200 and the transmission shaft 4400 may be realized by a coupling to transmit power. The transmission shaft 4400 passes and is fixed along rotation centers of the second centrifugal wind wheel 1200 and the third centrifugal wind wheel 1300. When the transmission shaft 4400 rotates, rotation of the second centrifugal wind wheel 1200 and the third centrifugal wind wheel 1300 may be realized. By configuring the transmission shaft 4400 to cooperate with the motor 2000, a problem of insufficient structural strength caused by the overlong length of the rotation shaft 2200 is avoided, and the driving of the plurality of centrifugal wind wheels 1000 can be realized in cooperation with the motor 2000 simultaneously.

As illustrated in FIG. 2, according to the present invention, in order to utilize the space of the air-conditioning indoor unit to the maximum extent, the motor 2000 is preferably disposed between the second centrifugal wind wheel 1200 and the first centrifugal wind wheel 1100. In an exemplary embodiment of the present disclosure, the centrifugal wind wheel 1000 needs to perform suction in the axial direction of the centrifugal wind wheel 1000 during operation, and the air enters the centrifugal wind wheel 1000 in the axial direction of the centrifugal wind wheel 1000. Therefore, adjacent centrifugal wind wheels 1000 are spaced apart from each other by a predetermined distance. At this time, by placing the motor 2000 between the first centrifugal wind wheel 1100 and the second centrifugal wind wheel 1200, a larger space occupied by disposing the motor 2000 outside the first centrifugal wind wheel 1100 may be avoided. When the motor 2000 is disposed between the second centrifugal wind wheel 1000 and the first centrifugal wind wheel 1100, the motor 2000 does not occupy all axial spaces of the centrifugal wind wheel 1000, and thus does not influence air suction of the centrifugal wind wheel 1000. In addition, since three centrifugal wind wheels 1000 are comprised in this embodiment, when the motor 2000 is disposed between the first centrifugal wind wheel 1100 and the second centrifugal wind wheel 1200, a distance of the motor 2000 from each centrifugal wind wheel 1000 is appropriate, making the driving of the motor 2000 more efficient.

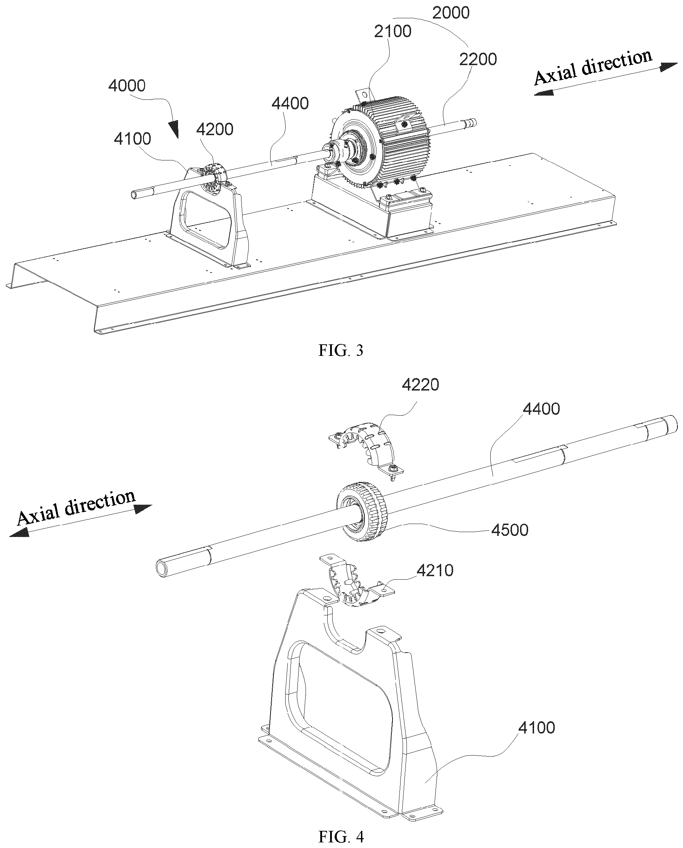

In another exemplary embodiment of the present invention, as illustrated in FIG. 2 and FIG. 3, when the transmission shaft 4400 and the rotation shaft 2200 are connected, the transmission shaft 4400 is equivalent to forming a cantilever structure. In order to make the rotation of the transmission shaft 4400 smoother, the air-conditioning indoor unit according to the invention further comprises a bracket structure 4000 for supporting the transmission shaft 4400, which plays a role of supporting the transmission shaft 4400. In addition, by disposing the bracket structure 4000 between the third centrifugal wind wheel 1300 and the second centrifugal wind wheel 1200, a space between the third centrifugal wind wheel 1300 and the second centrifugal wind wheel 1200 may be fully utilized, and the bracket structure 4000 is closer to a middle part of the transmission shaft 4400. In this way, the transmission shaft 4400 is supported more effectively, making operation of the transmission shaft 4400 more stable.

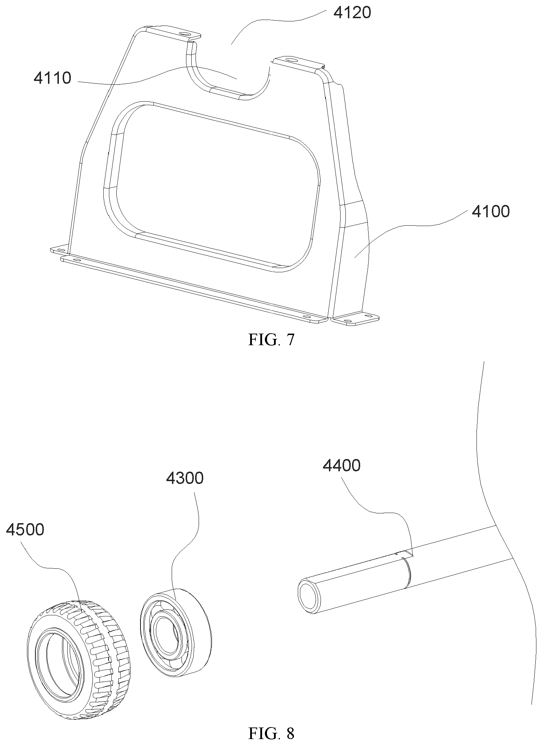

As illustrated in FIG. 4 and FIG. 7, in some embodiments of the present invention, the bracket structure 4000 comprises a bracket 4100, a bearing seat 4200, and a bearing 4300. Through cooperation of the bracket 4100, the bearing seat 4200, the bearing 4300, and the transmission shaft 4400, mounting difficulty of the transmission shaft 4400 is reduced, mounting efficiency is improved, and effective supporting and positioning of the transmission shaft 4400 are realized.

In an exemplary embodiment of the present invention, the supporting of the transmission shaft 4400 is realized by the bracket 4100. For example, the bracket 4100 is mounted to the second drain tray 5200 (described in detail below). In order to cause the transmission shaft 4400 to smoothly rotate, the transmission shaft 4400 needs to cooperate with the bearing seat 4200 and the bearing 4300, and the bearing seat 4200 and the bearing 4300 are parts used as a set. The bearing 4300 is a part capable of supporting the rotation of the transmission shaft 4400 and reducing a resistance to the rotation of the transmission shaft 4400. For example, the bearing 4300 comprises an inner ring, an outer ring, and balls located between the inner ring and the outer ring. The transmission shaft 4400 passes through the bearing 4300, i.e., the transmission shaft 4400 passes through the inner ring and is fixed to the inner ring. When the transmission shaft 4400 rotates, the inner ring may be driven to rotate relative to the outer ring, and the outer ring is fixed to the bearing seat 4200 and relatively fixed to the bearing seat 4200. The bearing seat 4200 is a part for supporting the bearing 4300 and ensuring stability of the bearing 4300 during the rotation of the transmission shaft 4400. For example, the outer ring of the bearing 4300 is fixed to the bearing seat 4200. In order to conveniently combine the bearing seat 4200 and the bracket 4100, the bracket 4100 is provided with a cavity 4110 and an opening 4120. The opening 4120 is in communication with the cavity 4110, and is formed in a radial direction of the cavity 4110. It can be understood that the radial direction here is perpendicular to an axial direction of the cavity 4110. The axial direction of the cavity 4110 is an extending direction of the transmission shaft 4400 when the transmission shaft 4400 is mounted to the bracket 4100. In this way, the arrangement of the cavity 4110 and the opening 4120 makes the bracket 4100 provided with a non-closed arc-shaped structure. For example, when the bracket 4100 is vertically fixed and mounted to the air-conditioning indoor unit, the cavity 4110 forms an upward opening 4120. In this way, the bearing seat 4200 can pass through the opening 4120 from top to bottom and be embedded into the cavity 4110, to realize mounting of the bearing seat 4200 with the bracket 4100. Because of occurrence of the opening 4120, during the mounting of the bearing seat 4200, the bearing seat 4200 enters the cavity 4110 from the opening 4120 and gradually approaches a wall of the cavity 4110. In this way, mounting efficiency of bearing seat 4200 can be effectively improved. Moreover, when the bearing seat 4200 is mounted to the bracket 4100, the bearing seat 4200 settles onto the bracket 4100 under action of gravity, thus providing an initial positioning that makes subsequent fastening operations more convenient. When the cavity 4110 has no opening 4120, the cavity 4110 causes the bracket 4100 to be in a closed ring shape. In this way, it is necessary to repeatedly align the bearing seat 4200 when the bearing seat 4200 is mounted, which reduces the mounting efficiency.

By providing the bracket 4100, the bearing seat 4200, the bearing 4300, and the transmission shaft 4400, the bearing 4300 is disposed in the bearing seat 4200, the transmission shaft 4400 passes through the bearing 4300, and the bracket 4100 is provided with the cavity 4110 and the opening 4120 in communication with the cavity 4110. In this way, the bearing seat 4200 can be embedded into the cavity 4110 from the opening 4120 to be mounted to the bracket 4100.The occurrence of the opening 4120 makes the mounting of the bearing seat 4200 more convenient, thus realizing the supporting of the transmission shaft 4400 and greatly improving mounting efficiency of the transmission shaft 4400.

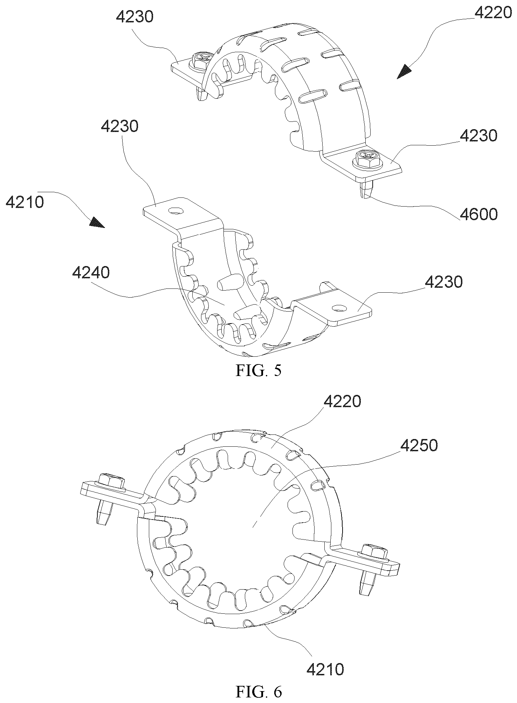

As illustrated in FIG. 5 and FIG. 6, according to the invention, the bearing seat 4200 comprises an upper bearing seat 4220 and a lower bearing seat 4210. The upper bearing seat 4220 and the lower bearing seat 4210 are combined to form the entire bearing seat 4200 through a mutual connection of the upper bearing seat 4220 and the lower bearing seat 4210. After the upper bearing seat 4220 and the lower bearing seat 4210 are connected to each other, a mounting cavity 4250 may be defined and is configured to realize the mounting of the bearing 4300. By designing the bearing seat 4200 as the upper bearing seat 4220 and the lower bearing seat 4210, the bearing is more convenient to be mounted into the bearing seat 4200.

According to the invention, since it is necessary to prevent the bearing 4300 from being disengaged from the bearing seat 4200 after the bearing 4300 is mounted to the bearing seat 4200, when the bearing seat 4200 is designed as the upper bearing seat 4220 and the lower bearing seat 4210, the upper bearing seat 4220 and the lower bearing seat 4210 are docked together to cover the bearing 4300, which can form position-limit and fixation of the bearing 4300, with a simpler and more convenient connection manner. There are various manners when the bearing seat 4200 is mounted to the bracket 4100. For example, the lower bearing seat 4210 is first mounted to the bracket 4100, then the transmission shaft 4400 mounted with the bearing 4300 is moved as a whole towards the bracket 4100 until the bearing 4300 is supported on the lower bearing seat 4210, and then the upper bearing seat 4220 is sleeved over the bearing 4300 and connected to the lower bearing seat 4210. In this way, the supporting and positioning of the transmission shaft 4400 can be realized. It can also be that the bearing 4300 may be first fixed to the transmission shaft 4400, then the upper bearing seat 4220 and the lower bearing seat 4210 collectively cover the bearing 4300 for fixing, and then the transmission shaft 4400, the bearing 4300, and the bearing seat 4200 as a whole are moved towards the bracket 4100 until the bearing seat 4200 is mounted into the cavity 4110 through the opening 4120. No matter which manner is chosen, through the combination of the upper bearing seat 4220 and the lower bearing seat 4210, mounting efficiency between the bearing seat 4200 and the bearing 4300 is improved.

In another exemplary embodiment of the present invention, as illustrated in FIG. 5 and FIG. 6, in order to realize fastening between the bearing seat 4200 and the bracket 4100, the bearing seat 4200 is connected to a periphery of the opening 4120, i.e., a portion of the bracket 4100 closing to the opening 4120. The portion is located outside the cavity 4110, which does not interfere with embedding of the bearing seat 4200 into the cavity 4110.

For example, as illustrated in FIG. 5 and FIG. 6, after the bearing seat 4200 is mounted to the bracket 4100, in order to realize connection and fastening between the bearing seat 4200 and the bracket 4100, the upper bearing seat 4220 and the lower bearing seat 4210 are each provided with a flange 4230, and the flange 4230 abuts against the periphery of the opening 4120. In this way, the fastening between the bearing seat 4200 and the bracket 4100 can be conveniently realized by the flange 4230 and the periphery of the opening 4120.

In an exemplary embodiment of the present invention, when the bearing seat 4200 is mounted to the bracket 4100, the lower bearing seat 4210 is embedded in the cavity 4110. It can be that the lower bearing seat 4210 is entirely embedded in the cavity 4110 or partially embedded in the cavity 4110. Two opposite ends of the lower bearing seat 4210 are provided with flanges 4230, and the flanges 4230 of the lower bearing seat 4210 are overlapped at the periphery of the opening 4120, i.e., overlapped at the portion of the bracket 4100 closing to the opening 4120.

The same applies to the upper bearing seat 4220.Two opposite ends of the upper bearing seat 4220 may also be provided with flanges 4230. When the upper bearing seat 4220 is connected to the lower bearing seat 4210, the flanges 4230 of the upper bearing seat 4220 are aligned with the flanges 4230 of the lower bearing seat 4210. In this way, the flanges 4230 of the upper bearing seat 4220, the flanges 4230 of the lower bearing seat 4210, and the periphery of the opening 4120 only need to be fastened in this case, to achieve the fastening between the bracket 4100 and the bearing seat 4200, thereby realizing the positioning and supporting of the transmission shaft 4400. Since the flange 4230 of the upper bearing seat 4220 and the flange 4230 of the lower bearing seat 4210 extend away from the mounting cavity 4250, connections of the flanges 4230 do not affect the mounting of the bearing 4300 to the mounting cavity 4250. Moreover, through the arrangement of the flange 4230, the bearing seat 4200 when located on the bracket 4100 may play a predetermined supporting and positioning effect, making the subsequent fastening operations more convenient.

In another exemplary embodiment of the present invention, as illustrated in FIG. 5 and FIG. 6, in some embodiments of the present invention, a fastening connection between the bracket 4100 and the bearing seat 4200 is realized by a fastener 4600. In this embodiment, the fastener 4600 is a threaded fastener, such as a bolt, a screw, or the like. The flange 4230 of the upper bearing seat 4220, the flange 4230 of the lower bearing seat 4210, and the periphery of the opening 4120 are provided with a mounting hole, respectively. The fastener 4600 sequentially passes through mounting holes of various components for fastening the components. In this way, the fastening connection between the bearing seat 4200 and the bracket 4100 is realized. Since the fastener 4600 passes through the flange 4230 of the upper bearing seat 4220 and the flange 4230 of the lower bearing seat 4210, fastening of the bearing 4300 is realized between the upper bearing seat 4220 and the lower bearing seat 4210, without interference with the bearing 4300 during tightly screwing of the flange 4230. Therefore, fixation among the bracket 4100, the bearing seat 4200, the bearing 4300, and the transmission shaft 4400 is conveniently realized.

As illustrated in FIG. 4 and FIG. 8, according to the present invention, the bracket structure 4000 further comprises a bearing rubber ring 4500. The bearing rubber ring 4500 has a predetermined elasticity. For example, the bearing rubber ring 4500 is made of rubber to form a closed ring shape. During a process where the transmission shaft 4400 drives the centrifugal wind wheel 1000 to rotate, a predetermined vibration may occur. In order to prevent the vibration from being transmitted to the bracket 4100 to cause noise, the bearing rubber ring 4500 is provided and is of a hollow ring structure as a whole. The bearing 4300 is placed in the bearing rubber ring 4500, i.e., the bearing rubber ring 4500 surrounds a circumferential direction of the bearing 4300 to cover the bearing 4300, and the bearing rubber ring 4500 is mounted in the bearing seat 4200, i.e., the bearing rubber ring 4500 is provided between the bearing 4300 and the bearing seat 4200 for providing cushioning. When the vibration is transmitted from the transmission shaft 4400 to the bearing 4300, the bearing rubber ring 4500 may absorb energy of the vibration, preventing the energy from continuing to be transmitted to the bearing seat 4200 and further transmitted to the bracket 4100. In this way, the generation of noise is avoided.

In another exemplary embodiment of the present invention, as illustrated in FIG. 5, in order to more facilitate the fixation of the bearing rubber ring 4500 and prevent the bearing rubber ring 4500 from being disengaged from the bearing seat 4200, a groove 4240 is disposed on the bearing seat 4200, and extends around an inner side of the bearing seat 4200. In this way, a peripheral portion of the bearing rubber ring 4500 can be embedded in the groove 4240, to prevent the bearing rubber ring 4500 from being disengaged from the bearing seat 4200 in the axial direction of the bearing seat 4200. In an exemplary embodiment of the present invention, the upper bearing seat 4220 and the lower bearing seat 4210 have groove structures, respectively. The integrated groove 4240 is formed by mutual docking of the upper bearing seat 4220 and the lower bearing seat 4210, which can realize covering of the bearing rubber ring 4500.

As illustrated in FIG. 2, in some embodiments of the present invention, the air-conditioning indoor unit further comprises a first drain tray 5100. The first drain tray 5100 is a structure for collecting the condensed water and is disposed below the evaporator 8000. When the air flows through and exchanges heat with the evaporator 8000, the condensed water is generated on a surface of the evaporator 8000. The condensed water flows to the first drain tray 5100 along the evaporator 8000 under the action of gravity, to prevent the condensed water from overflowing to outside of the air-conditioning indoor unit. In an exemplary embodiment of the present invention, the air-conditioning indoor unit has a chassis structure, and the first drain tray 5100 may be fixed to the chassis structure. When the evaporator 8000 is mounted, the bottom of the evaporator 8000 abuts against the first drain tray 5100. In this way, sealing between the evaporator 8000 and the first drain tray 5100 is realized, and the air is prevented from passing between the drain tray and the evaporator 8000 without performing heat exchange. In addition, in order to realize sealing of the top of the evaporator 8000, the top of the evaporator 8000 and a top cover 7100 of the air-conditioning indoor unit abut against each other. In this way, the air is prevented from passing between the evaporator 8000 and the top cover 7100 of the air-conditioning indoor unit without performing heat exchange. Sealing of upper and lower positions of the evaporator 8000 is realized through the cooperation of the first drain tray 5100 and the top cover 7100 of the air-conditioning indoor unit.

In another exemplary embodiment of the present invention, in order to realize sealing of two opposite ends of the evaporator 8000, a support plate 5300 is provided. It can be understood that, with reference to FIG. 2, the two opposite ends of the evaporator 8000 are left and right ends. The support plate 5300 respectively abuts against and is fixed to the two opposite ends of the evaporator 8000, and is mounted on the first drain tray 5100. In this way, sealing of the two opposite ends of the evaporator 8000 can be realized. Moreover, an air collection cavity 5400 is enclosed by the support plate 5300, the first drain tray 5100, the top cover 7100 of the air-conditioning indoor unit, and the air inlet end of the evaporator 8000. When the air flows into the air collection cavity 5400, the air is gathered and prevented from overflowing. In this way, the air passes through the evaporator 8000 more efficiently, and the heat exchange efficiency is improved.

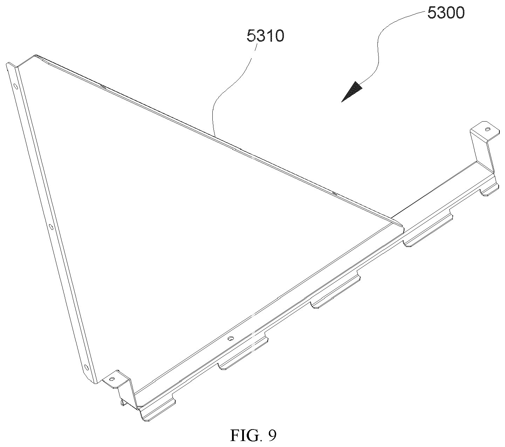

In another exemplary embodiment of the present invention, as illustrated in FIG. 2 and FIG. 9, in order to realize a demand for inclined mounting of the evaporator 8000, the support plate 5300 has an inclined surface in an inclined state formed thereon. In this way, the inclined surface 5310 of the support plate 5300 can support an end portion of the evaporator 8000 to make the evaporator 8000 inclined. A weight of the evaporator 8000 is supported by the support plate 5300. Through a support effect, structural strength requirements for the fastener being connected to the evaporator 8000 and the support plate 5300 are reduced. Moreover, a predetermined supporting and positioning effect is achieved when the evaporator 8000 is supported by the support plate 5300, which is more convenient to perform fastening operations on the support plate 5300 and the evaporator 8000 through the fastener.

As illustrated in FIG. 2, in some embodiments of the present invention, in order to realize discharge of the collected condensed water, a draining pump 6100 is provided. For example, as described above, the first drain tray 5100 is provided below the evaporator 8000 for collecting the condensed water flowing down from the evaporator 8000. At this time, forcible discharge of the condensed water may be realized through pumping and discharging effects of the draining pump 6100. In order to facilitate the arrangement of the draining pump 6100, the draining pump 6100 and the electric control box 3000 are arranged in a first direction, and the first direction herein is a direction from the centrifugal wind wheel 1000 to the evaporator 8000. For example, referring to an orientation in FIG. 2, the first direction is a front-rear direction. The centrifugal wind wheel 1000 is disposed in the front, the evaporator 8000 is disposed in the rear, the electric control box 3000 is disposed in the front and located at one side of the centrifugal wind wheel 1000 (at a left side of the centrifugal wind wheel 1000), and the draining pump 6100 is disposed at the rear of the electric control box 3000 and located at one side of the evaporator 8000. In this way, it is convenient to wiring design between the drainage pump 6100 and the electric control box 3000, making the wiring simpler. The electric control box 3000, the drainage pump 6100, and other parts are disposed together in a region where the electric control box 3000, the drainage pump 6100, and other parts are close to each other, which is more convenient for subsequent maintenance and treatment.

As described above, the first drain tray 5100 is provided below the evaporator 8000, and the condensed water generated when the air flows through the evaporator 8000 flows to the first drain tray 5100. In order to prevent the condensed water from being sprayed into an indoor environment along with flowing of the air, as illustrated in FIG. 2, the evaporator 8000 is disposed on an air inlet path of the centrifugal wind wheel 1000. It can be understood that the air inlet path of the centrifugal wind wheel 1000 is a path through which the air flows to an inlet of the centrifugal wind wheel 1000. For example, in FIG. 2, the evaporator 8000 is located at the rear of the centrifugal wind wheel 1000. In this way, when the air passes through the evaporator 8000 and takes away the condensed water, the condensed water may collide with the centrifugal wind wheel 1000 and be re-collected under obstruction of the centrifugal wind wheel 1000. Therefore, when the second drain tray 5200 is provided below the centrifugal wind wheel 1000, the condensed water obstructed by the centrifugal wind wheel 1000 is accumulated on the second drain tray 5200, and the second drain tray 5200 may be configured to be in communication with the first drain tray 5100. For example, the second drain tray 5200 is disposed at a higher position. In this way, water in the second drain tray 5200 may flow to the first drain tray 5100 under the action of gravity. The draining pump 6100 as mentioned above is disposed in the first drain tray 5100 to pump and discharge the condensed water in the first drain tray 5100 to the outside. When the bracket 4100 and the motor 2000 are mounted to the second drain tray 5200, the second drain tray 5200 provides a mounting base, which ensures a height at which the bracket 4100 and the motor 2000 are mounted, ensuring an effective connection between the motor 2000 and the transmission shaft 4400.

As illustrated in FIG. 1, in some embodiments of the present invention, the air-conditioning indoor unit further comprises a housing 7000 that defines an outer surface of the air-conditioning indoor unit. Components such as the motor 2000, the centrifugal wind wheel 1000, the evaporator 8000, and the electric control box 3000 are mounted in the housing 7000, and in particular, the electric control box 3000 is built in. In this way, an aesthetic degree of the whole machine can be improved.

The present invention also relates to an air conditioner. The air conditioner comprises the aforementioned air-conditioning indoor unit. In an exemplary embodiment of the present invention, the air-conditioning outdoor unit and the air-conditioning indoor unit are connected to realize refrigerant circulation. A structure of the air-conditioning indoor unit of this embodiment refers to the embodiments described above. Since the air conditioner adopts the technical solutions of the embodiments described above, the air conditioner at least has the beneficial effects brought by the technical solutions of the embodiments described above, and details are omitted herein.

The above is only some specific embodiments of the present disclosure, and does not limit the patent scope of the present invention as defined in the appended claims.

## Claims

1. An air-conditioning indoor unit, comprising:
a plurality of centrifugal wind wheels (1000);
a motor (2000) drivingly connected to a plurality of the centrifugal wind wheels (1000);
an electric control box (3000) disposed in an axial direction of the plurality of centrifugal wind wheels (1000); and
an evaporator (8000) disposed in a radial direction of the plurality of centrifugal wind wheels (1000) and obliquely disposed relative to a height direction of the air-conditioning indoor unit;
the air-conditioning indoor unit further comprising a transmission shaft (4400), wherein:
the centrifugal wind wheels (1000) comprise three centrifugal wind wheels (1000), the three centrifugal wind wheels (1000) being a first centrifugal wind wheel (1100), a second centrifugal wind wheel (1200), and a third centrifugal wind wheel (1300) that are arranged sequentially; and
the motor (2000) comprises a motor body (2100) and a rotation shaft (2200), the rotation shaft (2200) having an end connected to the first centrifugal wind wheel (1100) and another end connected to the transmission shaft (4400), and the transmission shaft (4400) being connected to the second centrifugal wind wheel (1200) and the third centrifugal wind wheel (1300); and
the air-conditioning indoor unit further comprising a bracket structure (4000) for supporting the transmission shaft (4400), the bracket structure (4000) being disposed between the second centrifugal wind wheel (1200) and the third centrifugal wind wheel (1300);
wherein the bracket structure (4000) comprises:
a bracket (4100) provided with a cavity (4110) and an opening (4120) in communication with the cavity (4110), the opening (4120) being located in a radial direction of the cavity (4110);
a bearing seat (4200) mounted to the bracket (4100) by embedding into the cavity (4110) through the opening (4120);
a bearing rubber ring (4500) disposed in the bearing seat (4200); and
a bearing (4300) disposed in the bearing rubber ring (4500), the transmission shaft (4400) passing through the bearing (4300);
**characterized in that**:
the bearing seat (4200) comprises a lower bearing seat (4210) and an upper bearing seat (4220) that are connected to each other, a mounting cavity (4250) for mounting the bearing (4300) being defined between the lower bearing seat (4210) and the upper bearing seat (4220).

2. The air-conditioning indoor unit according to claim 1, wherein the motor (2000) is disposed between the first centrifugal wind wheel (1100) and the second centrifugal wind wheel (1200).

3. The air-conditioning indoor unit according to claim 1, wherein the opening (4120) is located above the cavity (4110).

4. The air-conditioning indoor unit according to claim 1, wherein the lower bearing seat (4210) and the upper bearing seat (4220) are connected to a periphery of the opening (4120).

5. The air-conditioning indoor unit according to claim 4, wherein the lower bearing seat (4210) and the upper bearing seat (4220) are each provided with a flange (4230) connected to the periphery of the opening (4120).

6. The air-conditioning indoor unit according to claim 5, further comprising a fastener (4600) sequentially penetrating the flange (4230) of the upper bearing seat (4220), the flange (4230) of the lower bearing seat (4210), and the periphery of the opening (4120) for fastening.

7. The air-conditioning indoor unit according to claim 1, wherein the bearing seat (4200) is provided with a groove (4240) surrounding the bearing rubber ring (4500), enabling the bearing rubber ring (4500) to be embedded in the groove (4240).

8. The air-conditioning indoor unit according to claim 1, further comprising a first drain tray (5100), the evaporator (8000) being located above the first drain tray (5100), and the evaporator (8000) having a bottom abutting against the first drain tray (5100) and a top abutting against a top cover (7100) of the air-conditioning indoor unit.

9. The air-conditioning indoor unit according to claim 8, further comprising a support plate (5300) provided at each of two opposite ends of the evaporator (8000), the support plate (5300) being supported on the first drain tray (5100), an air collection cavity (5400) being enclosed by the first drain tray (5100), the support plate (5300), the evaporator (8000), and the top cover (7100); preferably the support plate (5300) is provided with an inclined surface (5310) to support an end portion of the evaporator (8000).

10. The air-conditioning indoor unit according to claim 1, further comprising a draining pump (6100), wherein:
taking a direction from each of the plurality of centrifugal wind wheels (1000) to the evaporator (8000) as a first direction, the electric control box (3000) and the draining pump (6100) are arranged in the first direction; or the air-conditioning indoor unit further comprising a first drain tray (5100) located below the evaporator (8000) and a second drain tray (5200) located below the plurality of centrifugal wind wheels (1000), the evaporator (8000) being located on an air inlet path of the plurality of centrifugal wind wheels (1000); or the air-conditioning indoor unit further comprising a housing (7000), the plurality of centrifugal wind wheels (1000), the motor (2000), the evaporator (8000), and the electric control box (3000) being disposed in the housing (7000).

11. An air conditioner, comprising an air-conditioning indoor unit according to any one of claims 1 to 10.

## Patentansprüche

1. Klimaanlagen-Inneneinheit, umfassend:
eine Vielzahl von Zentrifugal-Lüfterrädern (1000);
einen Motor (2000), der antreibend mit einer Vielzahl von Zentrifugal-Lüfterrädern (1000) verbunden ist;
einen elektrischen Schaltkasten (3000), der sich in einer axialen Richtung der Vielzahl von Zentrifugal-Lüfterrädern (1000) befindet; und
einen Verdampfer (8000), der sich in einer radialen Richtung der Vielzahl von Zentrifugal-Lüfterrädern (1000) befindet, und sich schräg relativ zu einer Höhenrichtung der Klimaanlagen-Inneneinheit befindet;
wobei die Klimaanlagen-Inneneinheit ferner eine Antriebswelle (4400) umfasst, wobei:
die Zentrifugal-Lüfterräder (1000) drei Zentrifugal-Lüfterräder (1000) umfassen, wobei die drei Zentrifugal-Lüfterräder (1000) ein erstes Zentrifugal-Lüfterrad (1100), ein zweites Zentrifugal-Lüfterrad (1200) und ein drittes Zentrifugal-Lüfterrad (1300) sind, die nacheinander angeordnet sind; und
der Motor (2000) einen Motorkörper (2100) und eine Drehwelle (2200) umfasst, wobei die Drehwelle (2200) ein Ende aufweist, das mit dem ersten Zentrifugal-Lüfterrad (1100) verbunden ist, und ein anderes Ende, das mit der Antriebswelle (4400) verbunden ist, und wobei die Antriebswelle (4400) mit dem zweiten Zentrifugal-Lüfterrad (1200) und dem dritten Zentrifugal-Lüfterrad (1300) verbunden ist; und
wobei die Klimaanlagen-Inneneinheit ferner eine Halterungsstruktur (4000) zum Stützen der Antriebswelle (4400) umfasst, wobei sich die Halterungsstruktur (4000) zwischen dem zweiten Zentrifugal-Lüfterrad (1200) und dem dritten Zentrifugal-Lüfterrad (1300) befindet;
wobei die Halterungsstruktur (4000) Folgendes umfasst:
eine Halterung (4100), die mit einem Hohlraum (4110) und einer Öffnung (4120) versehen ist, die in Verbindung mit dem Hohlraum (4110) steht, wobei sich die Öffnung (4120) in einer radialen Richtung des Hohlraums (4110) befindet;
einen Lagersitz (4200), der an der Halterung (4100) befestigt ist, indem er durch die Öffnung (4120) in den Hohlraum (4110) eingebettet ist;
einen Lager-Gummiring (4500), der sich in dem Lagersitz (4200) befindet; und
ein Lager (4300), das sich in dem Lager-Gummiring (4500) befindet, wobei die Antriebswelle (4400) durch das Lager (4300) verläuft;
**dadurch gekennzeichnet, dass**:
der Lagersitz (4200) einen unteren Lagersitz (4210) und einen oberen Lagersitz (4220) umfasst, die miteinander verbunden sind, wobei zwischen dem unteren Lagersitz (4210) und dem oberen Lagersitz (4220) ein Befestigungshohlraum (4250) zur Befestigung des Lagers (4300) definiert ist.

2. Klimaanlagen-Inneneinheit gemäß Anspruch 1, wobei sich der Motor (2000) zwischen dem ersten Zentrifugal-Lüfterrad (1100) und dem zweiten Zentrifugal-Lüfterrad (1200) befindet.

3. Klimaanlagen-Inneneinheit gemäß Anspruch 1, wobei sich die Öffnung (4120) oberhalb des Hohlraums (4110) befindet.

4. Klimaanlagen-Inneneinheit gemäß Anspruch 1, wobei der untere Lagersitz (4210) und der obere Lagersitz (4220) mit einem Umfang der Öffnung (4120) verbunden sind.

5. Klimaanlagen-Inneneinheit gemäß Anspruch 4, wobei der untere Lagersitz (4210) und der obere Lagersitz (4220) jeweils mit einem Flansch (4230) versehen sind, der mit dem Umfang der Öffnung (4120) verbunden ist.

6. Klimaanlagen-Inneneinheit gemäß Anspruch 5, ferner umfassend ein Befestigungselement (4600), das nacheinander den Flansch (4230) des oberen Lagersitzes (4220), den Flansch (4230) des unteren Lagersitzes (4210) und den Umfang der Öffnung (4120) durchdringt, zur Befestigung.

7. Klimaanlagen-Inneneinheit gemäß Anspruch 1, wobei der Lagersitz (4200) mit einer den Lager-Gummiring (4500) umgebenden Nut (4240) versehen ist, wodurch der Lager-Gummiring (4500) in die Nut (4240) eingebettet werden kann.

8. Klimaanlagen-Inneneinheit gemäß Anspruch 1, ferner umfassend eine erste Auffangwanne (5100), wobei sich der Verdampfer (8000) über der ersten Auffangwanne (5100) befindet und der Verdampfer (8000) eine Unterseite aufweist, die an der ersten Auffangwanne (5100) anliegt, und eine Oberseite, die an einer oberen Abdeckung (7100) der Klimaanlagen-Inneneinheit anliegt.

9. Klimaanlagen-Inneneinheit gemäß Anspruch 8, ferner umfassend eine Stützplatte (5300), die an jedem der beiden gegenüberliegenden Enden des Verdampfers (8000) vorgesehen ist, wobei die Stützplatte (5300) auf der ersten Auffangwanne (5100) aufliegt, wobei ein Luftsammelhohlraum (5400) von der ersten Auffangwanne (5100), der Stützplatte (5300), dem Verdampfer (8000) und der oberen Abdeckung (7100) umschlossen ist; wobei die Stützplatte (5300) vorzugsweise mit einer geneigten Fläche (5310) versehen ist, um einen Endbereich des Verdampfers (8000) abzustützen.

10. Klimaanlagen-Inneneinheit gemäß Anspruch 1, ferner umfassend eine Ablaufpumpe (6100), wobei:
wenn eine Richtung von jeder der Vielzahl von Zentrifugal-Lüfterrädern (1000) zum Verdampfer (8000) als eine erste Richtung angenommen wird, der elektrische Schaltkasten (3000) und die Ablaufpumpe (6100) in der ersten Richtung angeordnet sind; oder wobei die Klimaanlagen-Inneneinheit ferner eine erste Ablaufwanne (5100), die sich unterhalb des Verdampfers (8000) befindet, und eine zweite Ablaufwanne (5200), die sich unterhalb der Vielzahl von Zentrifugal-Lüfterrädern (1000) befindet, umfasst, wobei sich der Verdampfer (8000) an einem Lufteinlassweg der Vielzahl von Zentrifugal-Lüfterrädern (1000) befindet; oder wobei die Klimaanlagen-Inneneinheit ferner ein Gehäuse (7000) umfasst, wobei sich die Vielzahl von Zentrifugal-Lüfterrädern (1000), der Motor (2000), der Verdampfer (8000) und der elektrische Schaltkasten (3000) in dem Gehäuse (7000) befinden.

11. Klimaanlage, umfassend eine Klimaanlagen-Inneneinheit gemäß einem der Ansprüche 1 bis 10 .

## Revendications

1. Unité intérieure de climatisation, comprenant :
une pluralité de roues à vent centrifuges (1000) ;
un moteur (2000) relié de manière entraînante à une pluralité des roues à vent centrifuges (1000) ;
un boîtier de commande électrique (3000) disposé dans une direction axiale de la pluralité de roues à vent centrifuges (1000) ; et
un évaporateur (8000) disposé dans une direction radiale par rapport à la pluralité de roues à vent centrifuges (1000) et disposé obliquement par rapport à une direction de hauteur de l'unité intérieure de climatisation ;
l'unité intérieure de climatisation comprenant en outre un arbre de transmission (4400), dans laquelle :
les roues à vent centrifuges (1000) comprennent trois roues à vent centrifuges (1000), les trois roues à vent centrifuges (1000) étant une première roue à vent centrifuge (1100), une deuxième roue à vent centrifuge (1200) et une troisième roue à vent centrifuge (1300) qui sont disposées séquentiellement ; et
le moteur (2000) comprend un corps de moteur (2100) et un arbre de rotation (2200), l'arbre de rotation (2200) ayant une extrémité reliée à la première roue à vent centrifuge (1100) et une autre extrémité reliée à l'arbre de transmission (4400), et l'arbre de transmission (4400) étant relié à la deuxième roue à vent centrifuge (1200) et à la troisième roue à vent centrifuge (1300) ; et
l'unité intérieure de climatisation comprenant en outre une structure de support (4000) destinée à supporter l'arbre de transmission (4400), la structure de support (4000) étant disposée entre la deuxième roue de vent centrifuge (1200) et la troisième roue de vent centrifuge (1300) ;
dans laquelle la structure de support (4000) comprend :
un support (4100) muni d'une cavité (4110) et d'une ouverture (4120) en communication avec la cavité (4110), l'ouverture (4120) étant située dans une direction radiale de la cavité (4110) ;
un siège de palier (4200) monté sur le support (4100) par encastrement dans la cavité (4110) à travers l'ouverture (4120) ;
une bague en caoutchouc de palier (4500) disposé dans le siège de palier (4200) ; et
un palier (4300) disposé dans la bague en caoutchouc de palier (4500), l'arbre de transmission (4400) traversant le palier (4300) ;
**caractérisé en ce que** :
le siège de palier (4200) comprend un siège de palier inférieur (4210) et un siège de palier supérieur (4220) qui sont reliés l'un à l'autre, une cavité de montage (4250) destinée au montage du palier (4300) étant définie entre le siège de palier inférieur (4210) et le siège de palier supérieur (4220).

2. Unité intérieure de climatisation selon la revendication 1, dans laquelle le moteur (2000) est disposé entre la première roue à vent centrifuge (1100) et la deuxième roue à vent centrifuge (1200).

3. Unité intérieure de climatisation selon la revendication 1, dans laquelle l'ouverture (4120) est située au-dessus de la cavité (4110).

4. Unité intérieure de climatisation selon la revendication 1, dans laquelle le siège de palier inférieur (4210) et le siège de palier supérieur (4220) sont reliés à une périphérie de l'ouverture (4120).

5. Unité intérieure de climatisation selon la revendication 4, dans laquelle le siège de palier inférieur (4210) et le siège de palier supérieur (4220) sont chacun pourvus d'une bride (4230) reliée à la périphérie de l'ouverture (4120).

6. Unité intérieure de climatisation selon la revendication 5, comprenant en outre une fixation (4600) traversant successivement la bride (4230) du siège de palier supérieur (4220), la bride (4230) du siège de palier inférieur (4210) et la périphérie de l'ouverture (4120) à des fins de fixation.

7. Unité intérieure de climatisation selon la revendication 1, dans laquelle le siège de palier (4200) est muni d'une rainure (4240) entourant la bague en caoutchouc de palier (4500), permettant à la bague en caoutchouc de palier (4500) d'être encastrée dans la rainure (4240).

8. Unité intérieure de climatisation selon la revendication 1, comprenant en outre un premier bac de récupération (5100), l'évaporateur (8000) étant situé au-dessus du premier bac de récupération (5100), et l'évaporateur (8000) ayant une partie inférieure en butée contre le premier bac de récupération (5100) et une partie supérieure en butée contre un couvercle supérieur (7100) de l'unité intérieure de climatisation.

9. Unité intérieure de climatisation selon la revendication 8, comprenant en outre une plaque de support (5300) prévue à chacune de deux extrémités opposées de l'évaporateur (8000), la plaque de support (5300) étant supportée sur le premier bac de récupération (5100), une cavité de collecte d'air (5400) étant délimitée par le premier bac de récupération (5100), la plaque de support (5300), l'évaporateur (8000) et le couvercle supérieur (7100); de préférence, la plaque de support (5300) est pourvue d'une surface inclinée (5310) pour supporter une partie d'extrémité de l'évaporateur (8000).

10. Unité intérieure de climatisation selon la revendication 1, comprenant en outre une pompe de vidange (6100), dans laquelle :
en considérant une direction allant de chacune de la pluralité de roues à vent centrifuges (1000) vers l'évaporateur (8000) comme une première direction, le boîtier de commande électrique (3000) et la pompe de vidange (6100) sont disposés dans la première direction; ou l'unité intérieure de climatisation comprenant en outre un premier bac de récupération (5100) situé sous l'évaporateur (8000) et un deuxième bac de récupération (5200) situé sous la pluralité de roues à vent centrifuges (1000), l'évaporateur (8000) étant situé sur un trajet d'entrée d'air de la pluralité de roues à vent centrifuges (1000); ou l'unité intérieure de climatisation comprenant en outre un boîtier (7000), la pluralité de roues à vent centrifuges (1000), le moteur (2000), l'évaporateur (8000) et le boîtier de commande électrique (3000) étant disposés dans le boîtier (7000).

11. Climatiseur, comprenant une unité intérieure de climatisation selon l'une quelconque des revendications 1 à 10 .
